# EUROPÄISCHE PATENTANMELDUNG

(11) **EP 0 822 055 A1**
(43) Veröffentlichungstag der Anmeldung: **04.02.1998**
(21) Anmeldenummer: 97112679.2
(22) Anmeldetag: 24.07.1997
(51) Int. Cl.: B29C 47/76

(54) **Entgasungsvorrichtung für Schneckenmaschinen**

(30) Priorität: 29.07.1996 DE 19630383
(71) Anmelder: Christ, Hubert Dr., 52399 Golzheim-Merzenich (DE)
(72) Erfinder: Christ, Hubert Dr., 52399 Golzheim-Merzenich (DE)
(74) Vertreter: Kohlmann, Kai, Dipl.-Ing.

(57) **Zusammenfassung**

Um eine Entgasungsvorrichtung für eine Schneckenmaschine zu schaffen, die auf einfache Weise eine wirksame Entfernung flüchtiger Bestandteile aus unterschiedlichen Polymeren und Polymermischungen innerhalb eines breiten Viskositätsbereiches ermöglicht, wird erfindungsgemäß eine Entgasungsvorrichtung vorgeschlagen, bei der durch konstruktive Maßnahmen ein Kondensieren der flüchtigen Bestandteile an einem an der Entgasungsöffnung angeschlossenen Rohr verhindert wird.

## Beschreibung

Die Erfindung betrifft eine Entgasungsvorrichtung für eine Schneckenmaschine zur Aufbereitung von Kunststoffen mit mindestens einer in einem Gehäuse drehbar angeordneten Welle, einer Einfüllöffnung und mindestens einer Entgasungsöffnung, auf die eine mit einem Unterdruckerzeuger verbundene Entgasungskammer aufgesetzt ist.

Aus dem Stand der Technik sind Einwellen- und Zweiwellenextruder mit Entgasungsvorrichtungen bekannt. Aus der US 4,260,264 geht beispielsweise ein biaxialer Entgasungsextruder für Flüssigabfälle mit Dosierzylinder und einem substanzverdichtenden Teil hervor. Dieser Entgasungsextruder besitzt eine Vielzahl von Entgasungszylindern, die mit einem abstreifenden Kolben ausgestattet sind. Durch das Abstreifen der anhaftenden Masse an der Innenwand der Entgasungskammer gelangt kondensiertes Material wieder in die Schmelze. Diese Art von Entgasungskammern ist für den konventionellen Einsatz bei Ein- und Zweiwellenextrudern für die Verarbeitung von thermoplastischen Kunststoffen und/oder Kautschuken nicht geeignet.

In der DE 32 42 239 A1 ist eine Einrichtung zur Füllstandsüberwachung eines an einer Vakuumquelle angeschlossenen Entgasungsdomes für Extruder beschrieben. Mit dieser Füllstandsüberwachung läßt sich die Leistung und der Durchsatz des Extruders gut steuern. Nachteilig bei der Verarbeitung von Kunststoffen mit einem solchen System ist, daß insbesondere monomere Bestandteile zurück in die Polymerschmelze gelangen können bzw. verkohlen und als abgebautes Polymer die Polymerschmelze verunreinigen.

In der EP 05 85 528 B1 wird eine Entgasungsvorrichtung für eine zweiwellige Schneckenmaschine zur Aufbereitung von Kunststoffen beschrieben, die dieses Problem teilweise löst.

Hierzu ist die Entgasungsvorrichtung seitlich in einer horizontalen Ebene am Schneckengehäuse angebracht. Bei sehr dünnflüssigen Schmelzen wie z. B. bei Polyamiden, Polyamid 6 und Polyamid 6.6 ist diese Entgasungsvorrichtung nur beschränkt einsetzbar, da bedingt durch die seitliche Anordnung ein Teil des Polymers in den Entgasungsstutzen fließt. Zuverlässig läßt sie sich daher nur mit bestimmten Viskositäten bzw. Polymeren einsetzen. Um die Entgasungsvorrichtung an einer Schneckenmaschine einsetzen zu können, müssen die Entgasungsöffnungen in Form einer sich erweiternden Kegelbohrung ausgebildet sein. Außerdem sind taschenförmige Erweiterungen in der Schneckenmaschine zur Aufnahme der Schmelzen erforderlich.

Besonders nachteilig wirken sich rückfließende Schmelzreste oder Kondensationsprodukte von Monomeren, Lösungsmitteln oder Schleppmitteln bei den bekannten Vorrichtungen aus. Die Schmelzreste und Kondensationsprodukte verkohlen im Entgasungsraum und gelangen in die Schmelze.

Der Erfindung liegt daher die Aufgabe zugrunde, eine Entgasungsvorrichtung für eine Schneckenmaschine zu schaffen, die auf einfache Weise eine wirksame Entfernung flüchtiger Bestandteile aus unterschiedlichen Polymeren und Polymermischungen innerhalb eines breiten Viskositätsbereiches ermöglicht.

Die Aufgabe wird nach der Erfindung bei einer Entgasungsvorrichtung der eingangs erwähnten Art dadurch gelöst, daß die Entgasungskammer aus einem inneren und einem äußeren Rohr mit oberen und unteren Rändern gebildet wird, wobei das äußere Rohr das innere Rohr unter Ausbildung eines Ringraumes umgibt, das innere Rohr mit seinem unteren Rand an die Entgasungsöffnung anschließt, das äußere Rohr an seinem oberen Rand durch einen Deckel verschlossen ist, der obere Rand des inneren Rohres mit Abstand zu dem Deckel endet und ein Durchgang im äußeren Rohr für die Verbindung mit dem Unterdruckerzeuger zumindest teilweise unterhalb des tiefsten Punktes des oberen Randes des inneren Rohres angeordnet ist.

Die erfindungsgemäße Vorrichtung läßt sich an allen bestehenden Schneckenmaschinen, die eine Entgasungsöffnung an der Oberseite besitzen, leicht anbringen. Ein komplizierter Umbau wie bei einer Vorrichtung nach der EP 05 85 528 B1 ist aufgrund der Erfindung nicht nötig. Die Vorteile der Erfindung liegen insbesondere darin, daß die Entgasungsvorrichtung äußerst wirtschaftlich ist und damit ausgerüstete Schneckenmaschinen ein sehr hochwertiges Produkt erzeugen.

Durch die erfindungsgemäße Vorrichtung wird sicher verhindert, daß fortwährend Kondensationsprodukte bestehend aus Oligomeren und/oder Monomeren mit Wasser oder Schleppmitteln an der Innenwand des Innenrohrs kondensieren, verkohlen und als Abbauprodukte in die Schmelze gelangen. Bei brillanten, hellen Farbeinstellungen oder Naturfarben thermoplastischer Kunststoffe und/oder Kautschuke, insbesondere aus der Gruppe ABS, PS, Polyamiden, Polyestern, PC, PMMA und Polyolefinen führen solche Abbauprodukte zu Stippen und schwarzen Punkten im polymeren Endprodukt. Dies erfordert einen erhöhten Überwachungsaufwand in der Produktion und die Produkte sind zum Teil minderwertig.

Je nach Viskositäten der Polymere aus der Gruppe der Polyamide, Polycarbonate, Polyester, PMMA, Polystyrole, ABS, SAN, Polyolefine, thermoplastischen Elastomere und/oder Mischungen daraus, hat sich eine Entgasungsvorrichtung nach einem der Ansprüche 2 - 4 als vorteilhaft herausgestellt.

Bei hohen Entgasungsleistungen und/oder hochzähen Produkten ist es vorteilhaft eine mehrfache Entgasung vorzunehmen. Mit den Merkmalen der Ansprüche 5 und 6 läßt sich bei einer erfindungsgemäßen Entgasungsvorrichtung die Entgasungsleistung entscheidend verbessern, weil sich kein Kondensat an dem vorzugsweise als Deckel für das äußere Rohr ausgeführten Schauglas absetzen kann.

Eine Maßnahme nach den Merkmalen des Anspruchs 7 ermöglicht eine einfache Steuerung des Extruders.

In der nachfolgenden Beschreibung von zwei Ausführungsbeispielen ist die Erfindung näher erläutert.

Hierin zeigen:
- Figur 1: Eine Gesamtansicht einer Schneckenmaschine,
- Figur 2: einen Schnitt durch die Entgasungsvorrichtung gemäß der Schnittlinie a-a in Fig. 1 mit quer zur Förderrichtung des Schneckenextruders abgewinkelter Längsachse c,
- Figur 3: einen Schnitt durch die Entgasungsvorrichtung entsprechend Fig. 1, jedoch vertikal angeordneter Längsachse der Entgasungskammer.

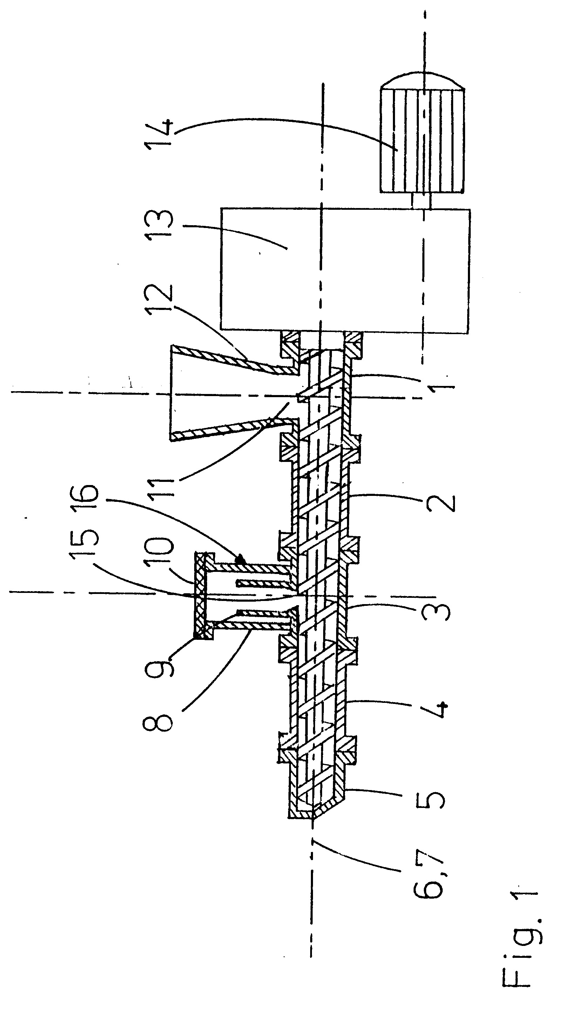

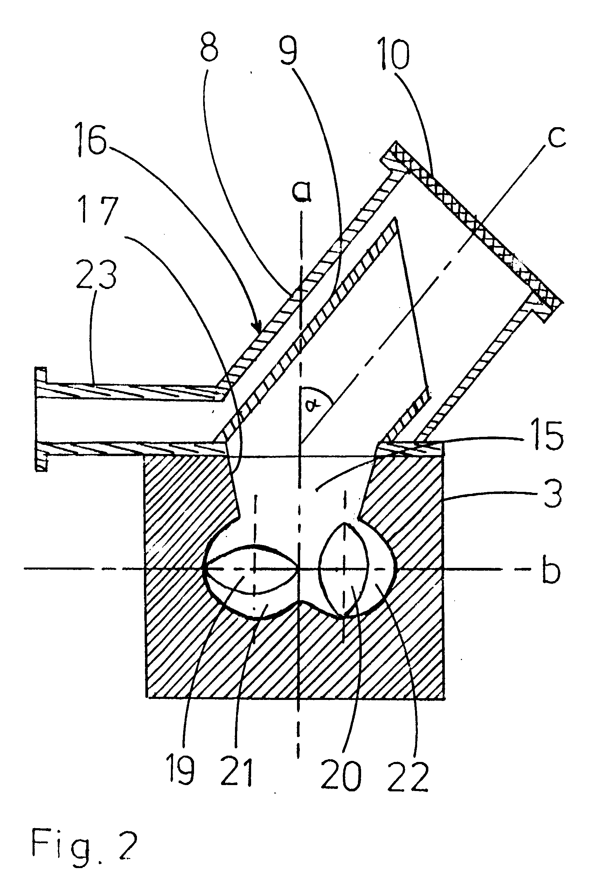

Der in Fig. 1 dargestellte Zweiwellenextruder besteht aus aneinandergeflanschten Gehäuseschüssen 1, 2, 3, 4, einer Auspreßdüse 5, einer Entgasungskammer 16, einem Einfülltrichter 12, einem Getriebe 13, einem Elektromotor 14 und zwei kämmend ineinandergreifenden Schneckenwellen 19, 20 (Fig. 2), die konzentrisch zu den Längsachsen 6, 7, von Bohrungen 21 und 22 in dem Extruder angeordnet sind. Das zu verarbeitende Produkt wird über den Einfülltrichter 12 zudosiert, in den Gehäuseschüssen 1 und 2 aufgeschmolzen und komprimiert, im Gehäuseschuß 3 entspannt und entgast, im Gehäuseschuß 4 erneut komprimiert und an der Auspreßdüse 5 ausgestoßen.

An dem Gehäuseschuß 3 ist, wie in Fig. 2 gezeigt, in gegenüber der Senkrechten zur Aufstandsfläche des Extruders abgewinkelter Anordnung die Entgasungskammer 16 gasdicht befestigt. Die Entgasungskammer 16 besteht aus einem äußeren Rohr 8 und einem inneren Rohr 9, das an eine Kegelbohrung 17 anschließt. Außerdem ist sie mit einem beheizbaren Schauglas 10 versehen. Sie ist entsprechend der Linie c mit dem Winkel "α" abgewinkelt. Die Entgasungskammer 16 ist über einen Vakuumanschluß 23 mit einem Vorratsbehälter verbunden, dem eine nicht dargestellte Vakuumpumpe vorgeschaltet ist. In dem Ringraum zwischen dem inneren Rohr 9 und dem äußeren Rohr 8 kondensieren flüchtige Bestandteile wie Wasser und/oder Monomere oder Oligomere aus den Kunststoffschmelzen und fließen über den Vakuumanschluß 23 in den Vorratsbehälter.

Bei abgewinkelter Anordnung der Entgasungskammer 16 läßt sich über der Entgasungsöffnung 15 die Schmelze des Extruders kontrollieren, ohne daß Kondensat von dem Schauglas 10 in die Polymerschmelze gelangt, insbesondere dann, wenn die vom inneren Rohr 9 an dessen oberen Rand 25 freigegebene Öffnung im wesentlichen senkrecht zur Aufstandsfläche des Extruders steht (vgl. Fig. 2).

Der Neigungswinkel zwischen den Achsen a und c in Fig. 2 beträgt insbesondere zwischen 20° und 60°.

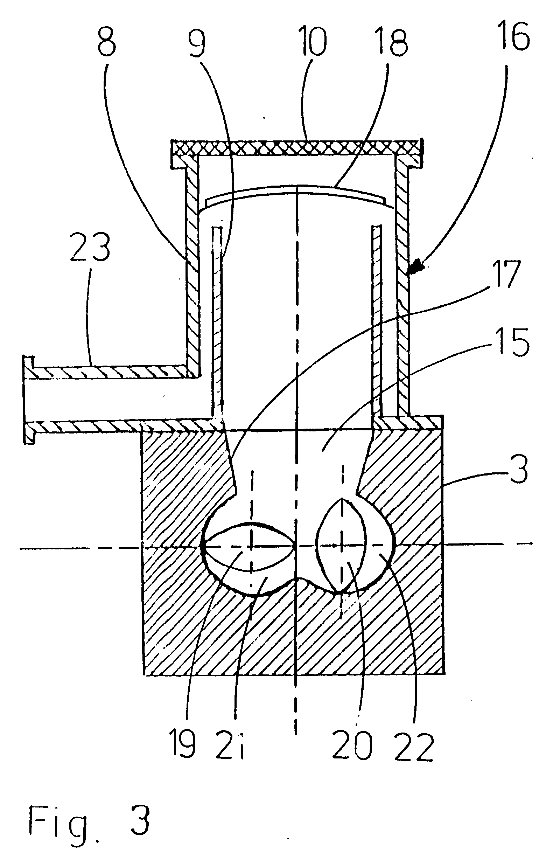

Ist eine direkte Sicht auf die Schneckenwellen 19, 20 nicht erforderlich, kann oberhalb des Innenrohrs 9 eine Destillierglocke 18 angeordnet sein (vgl. Fig. 3). In diesem Fall ist es nicht erforderlich, die Entgasungskammer 16 abzuwinkeln, damit kein sich an dem Deckel bildendes Kondensat in die Kunststoffschmelze gelangt.

In die erfindungsgemäße Vorrichtung kann eine aus dem Stand der Technik bekannte Füllstandsüberwachung eingebaut werden, um die Schmelze zu kontrollieren und die Leistung des Extruders und des Materialdurchsatzes zu steuern. Ebenso kann das Schauglas 10 beispielsweise mit Heizlamellen beheizt werden, um eine Kondensation zu unterbinden.

## Patentansprüche

1. Entgasungsvorrichtung für eine Schneckenmaschine zur Aufbereitung von Kunststoffen mit mindestens einer in einem Gehäuse drehbar angeordneten Welle, einer Einfüllöffnung und mindestens einer Entgasungsöffnung, auf die eine mit einem Unterdruckerzeuger verbundene Entgasungskammer aufgesetzt ist, **dadurch gekennzeichnet**, daß
- die Entgasungskammer (16) aus einem inneren und einem äußeren Rohr (9, 8) mit oberen und unteren Rändern gebildet wird, wobei das äußere Rohr (8) das innere Rohr (9) unter Ausbildung eines Ringraumes umgibt,
- das innere Rohr (9) mit seinem unteren Rand an die Entgasungsöffnung (15) anschließt,
- das äußere Rohr (8) an seinem oberen Rand durch einen Deckel (10) verschlossen ist, der obere Rand (25) des inneren Rohres (9) mit Abstand zu dem Deckel (10) endet und
- ein Durchgang im äußeren Rohr (8) für die Verbindung (23) mit dem Unterdruckerzeuger zumindest teilweise unterhalb des tiefsten Punktes (26) des oberen Randes (25) des inneren Rohres (9) angeordnet ist.

2. Entgasungsvorrichtung nach Anspruch 1, **dadurch gekennzeichnet**, daß die Längsachse (c) der Entgasungskammer (16) gegenüber der Senkrechten (a) zur Aufstandsfläche der Schneckenmaschine abgewinkelt ist.

3. Entgasungsvorrichtung nach Anspruch 2, **dadurch gekennzeichnet**, daß die Längsachse (c) in dem Kegelmantel eines geraden Kreiskegels mit einer Grundfläche und einer Kegelspitze liegt, wobei der Mittelpunkt der Grundfläche und die Kegelspitze auf der Senkrechten (a) zur Aufstandsfläche der Schneckenmaschine liegen.

4. Entgasungsvorrichtung nach Anspruch 3, **dadurch gekennzeichnet**, daß der Winkel (α) zwischen der Senkrechten (a) und der Längsachse (c) zwischen 20° - 60° beträgt.

5. Entgasungsvorrichtung nach einem der Ansprüche 1 bis 3, **dadurch gekennzeichnet**, daß innerhalb der Entgasungskammer (16) eine Destillierglocke (18) angeordnet ist.

6. Entgasungsvorrichtung nach einem der Ansprüche 1 bis 5, **dadurch gekennzeichnet**, daß die Entgasungskammer (16) ein beheiztes Schauglas (10) aufweist.

7. Entgasungsvorrichtung nach einem der Ansprüche 1 bis 6, **dadurch gekennzeichnet**, daß die Entgasungskammer (16) eine Füllstandsüberwachung zur Kontrolle der Schmelze aufweist.

8. Entgasungsvorrichtung nach einem der Ansprüche 1 bis 7, **dadurch gekennzeichnet**, daß sie an einem Gehäuseschuß (3) einer aus mehreren Gehäuseschüssen (1 - 5) bestehenden Schneckenmaschine angeordnet ist.

9. Entgasungsvorrichtung nach einem der Ansprüche 1 bis 8, **dadurch gekennzeichnet**, daß die Entgasungsvorrichtung auf einer Schneckenmaschine aufsetzt, deren Entgasungsöffnungen (15) sich in Richtung der Entgasungsvorrichtung kegelförmig erweitern.
